(19) Europäisches Patentamt
European Patent Office
Office européen des brevets

(11) **EP 2 808 609 A1**

(12) **EUROPEAN PATENT APPLICATION**
published in accordance with Art. 153(4) EPC

(43) Date of publication:
**03.12.2014 Bulletin 2014/49**

(21) Application number: **13740938.9**

(22) Date of filing: **23.01.2013**

(51) Int Cl.:
*F23N 5/00* (2006.01)      *F23N 1/00* (2006.01)
*G01F 1/00* (2006.01)      *G01F 1/68* (2006.01)
*G05D 7/06* (2006.01)

(86) International application number:
**PCT/JP2013/051302**

(87) International publication number:
**WO 2013/111776 (01.08.2013 Gazette 2013/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2012   JP 2012011193**
**23.01.2012   JP 2012011219**

(71) Applicant: **JX Nippon Oil & Energy Corporation
Chiyoda-ku
Tokyo 100-8162 (JP)**

(72) Inventors:
• **TSUKAGOSHI, Shouichi
Tokyo 100-8162 (JP)**
• **MIZUNO, Yasushi
Tokyo 100-8162 (JP)**

(74) Representative: **Patentanwälte Vollmann &
Hemmer
Wallstraße 33a
23560 Lübeck (DE)**

(54) **FUEL SUPPLY SYSTEM, FUEL CELL SYSTEM, AND METHOD FOR RUNNING EACH**

(57)     To allow the supply of an appropriate amount of gaseous fuel even if the composition of the gaseous fuel varies. A composition-independent flow meter 4 capable of measuring a flow rate without depending on the composition of the gaseous fuel is disposed in series with a thermal flow meter 3 in a supply pathway of the gaseous fuel. When the measured value of the thermal flow meter 3 and the measured value of the composition-independent flow meter 4 differ by a certain degree or higher, it is determined that there is an abnormal state, and the conversion factor with respect to the measured value of the thermal flow meter 3 is set. The composition of the gaseous fuel is estimated based on the set conversion factor, and the target supply amount of the gaseous fuel is corrected and controlled based on the estimated composition.

*FIG. 1*

**Description**

TECHNICAL FIELD

The present invention relates to a fuel supply system or a fuel cell system configured to include a fuel supply device that supplies hydrocarbon-based gaseous fuel (city gas, LPG and the like), and more particularly, to a technique for controlling a supply amount of the gaseous fuel.

BACKGROUND ART

In the fuel supply system, a flow meter configured to measure a flow rate of a gaseous fuel is disposed in a supply pathway of the gaseous fuel, and the measured flow rate is used in feedback control of the supply amount of fuel or used as a parameter of another control. As the flow meter, in general, a thermal flow meter as a mass flow meter is used. The reason is that the thermal flow meter is easily reduced in size and has characteristics of satisfactory responsiveness due to the size reduction.

However, due to variation in properties (composition and calorific value) of the gaseous fuel, satisfactory control may not be performed. In particular, in many cases, when using city gas derived from natural gas, the composition or the calorific value thereof may vary depending on gas companies or depending on regions even when the gas is supplied by the same gas company, and in addition, the compositions may vary due to mixing of the air on the way or the like, depending on a pathway or a distance from a supply source. When the properties of the fuel, especially, the compositions vary in this way, the thermal flow meter may not indicate the correct value, and accordingly it may be difficult to perform a preferred control.

As the related art, there are techniques described in Patent Documents 1 to 3.

(1) Patent Document 1

In a Karman vortex flow meter using a thermal flow sensor, gas species flowing through a flow path is automatically discriminated. For this reason, correlation information between a mass flow rate of the gas to be measured and a current value flowing through a heating resistor is stored for each of the gas species, and the type of gas to be measured is discriminated based on the correlation information, from the mass flow rate in a flow area having a constant Strouhal number irrespective of the gas species and a current value at that time. After discrimination, it is possible to measure the mass flow rate at high accuracy, by correcting the mass flow rate based on the correction coefficient peculiar to the gas species.

(2) Patent Document 2

When mixing gases of a plurality of containers to supply the gas mixture, the flow rates of the gases to be mixed are measured from an amount of weight loss of the respective containers and the composition of the gas mixture is calculated in advance, so that a conversion factor with respect to the thermal flow meter is obtained, and thus, it is possible to perform the accurate measurement of the mass flow rate of the gas mixture.

(3) Patent Document 3

A characteristic diagram representing the properties of fuel having the unknown composition is created, and then, by comparing a characteristic curve of fuel having the unknown composition represented by the characteristic diagram with a characteristic curve of fuel having the known composition, the unknown composition of the fuel is specified. As the properties of fuel, the characteristics of an air ratio and an exhaust gas oxygen concentration, that is, a relation between an exhaust A/F and an intake A/F is used.

REFERENCE DOCUMENT LIST

PATENT DOCUMENT

Patent Document 1: Japanese Patent Application Laid-open Publication No. 2011-203075

Patent Document 2: Japanese Patent Application Laid-open Publication No. 2007-024511

# EP 2 808 609 A1

Patent Document 3: Japanese Patent Application Laid-open Publication No. 2004-011487

## SUMMARY OF THE INVENTION

### PROBLEMS TO BE SOLVED BY THE INVENTION

However, in the related art, there may be problems as follows.

(1) Patent Document 1

It is possible to discriminate the gas species only in the flow area having the constant Strouhal number. Furthermore, since only the gas species, information of which is stored in advance, can be discriminated, it is not possible to cope with dynamic variation in gas composition.

(2) Patent Document 2

Since it is necessary to obtain information of the composition of the gas mixture in advance, it is not possible to cope with the variation when it is not possible to obtain information of the composition.

(3) Patent Document 3

Since there is a need to cause fuel to react (burn) once for specifying the fuel composition, the technique can be used only for applications such as combustion, and it is not possible to grasp the fuel composition before start-up of the operation. In addition, since there is a need to shake A/F to get data for specifying the fuel composition, there is a possibility of occurrence of a situation in which the operation is started in the state in which adjustments are inappropriate.

The present invention was made in view of such circumstances, and an object thereof is to provide a fuel supply system capable of performing the suitable control, even when the properties of fuel vary, from the fact that a thermal flow meter has characteristics in which a size reduction is easy and responsiveness is satisfactory due to the size reduction, but when the properties of the fuel, especially compositions thereof vary, the correct value may not be indicated, which may make a suitable control difficult.

Furthermore, another object of the present invention is to provide a general-purpose fuel supply system, and a fuel cell system that uses the gaseous fuel after reforming.

### MEANS FOR SOLVING THE PROBLEMS

A fuel supply system according to the present invention includes a fuel supply device configured to supply a hydrocarbon-based gaseous fuel to a supply target, a flow meter configured to measure a flow rate of the gaseous fuel supplied by the fuel supply device, and a control device to which a signal of the flow meter is input to control a supply amount of the fuel supply device.

Here, as the flow meter, a thermal flow meter, and a composition-independent flow meter capable of measuring the flow rate without depending on a composition of the gaseous fuel are included.

The control device includes a measured flow rate abnormality determination unit configured to determine whether there is an abnormal state based on a degree of difference between a measured value of the thermal flow meter and a measured value of the composition-independent flow meter, a conversion factor setting unit configured to set a conversion factor with respect to the measured value of the thermal flow meter when it is determined that there is the abnormal state, and a supply amount adjusting unit configured to adjust a supply amount of the gaseous fuel supplied by the fuel supply device based on the conversion factor.

The conversion factor setting unit may set the conversion factor based on a ratio of the measured value of the composition-independent flow meter and the measured value of the thermal flow meter.

The supply amount adjusting unit may include a fuel property estimating unit configured to estimate the fuel properties of the gaseous fuel on the basis of the conversion factor set by the conversion factor setting unit, and a target supply amount correcting unit configured to correct a target supply amount of the gaseous fuel on the basis of the estimated fuel properties.

The fuel property estimating unit may specify a sub-ingredient from predetermined sub-ingredient candidates, depending on the result of comparison between the conversion factor set by the conversion factor setting unit and a conversion factor previously determined for the main ingredient of the gaseous fuel, and the fuel property estimating unit may obtain molar fractions of the main ingredient and the specified sub-ingredient, based on the conversion factor set by the conversion factor setting unit, the conversion factor previously determined for the main ingredient, and a conversion factor previously determined for the specified sub-ingredient.

The sub-ingredient candidates may be a combustible ingredient having a calorific value different from that of the main ingredient of the gaseous fuel, and an incombustible ingredient.

The supply target of the fuel supply system is not particularly limited and the fuel supply system can be used as a general-purpose fuel supply system, and the present invention is also applicable to a fuel cell system as follows.

That is, the present invention is also applicable to a fuel cell system that includes a fuel reforming device configured to generate hydrogen-rich reformed fuel by performing steam reforming of a hydrocarbon-based gaseous fuel, a fuel cell stack configured to perform power generation by electrochemical reaction between the generated reformed fuel and air, a fuel supply device configured to supply the gaseous fuel to the reforming device, a for-reforming-water supply device configured to supply water for the steam reforming to the reforming device, a flow meter configured to measure a flow rate of the gaseous fuel supplied to the reforming device from the fuel supply device, and a control device to which a signal of the flow meter is input to control the respective supply amounts of the fuel supply device and the for-reforming-water supply device.

The supply amount adjusting unit in this case adjusts the supply amount of the gaseous fuel and the supply amount of water, supplied by the fuel supply device and the for-reforming-water supply device, based on the conversion factor.

Accordingly, the supply amount adjusting unit in this case may be configured to include a fuel property estimating unit configured to estimate the fuel properties of the gaseous fuel on the basis of the conversion factor set by the conversion factor setting unit, and a target supply amount calculating unit configured to calculate the target supply amount of the gaseous fuel and the target supply amount of water on the basis of the estimated fuel properties and the target power generation conditions.

EFFECTS OF THE INVENTION

According to the present invention, there is an effect that it is possible to perform the suitable fuel supply even when the properties of the gaseous fuel vary.

Furthermore, there is an effect that it is possible to supply the appropriate amount of fuel and the for-reforming water in the fuel cell system supplied with fuel of various compositions, without installing the equipment of complicated and expensive configuration.

BRIEF DESCRIPTION OF THE DRAWINGS

Fig. 1    is a schematic configuration diagram of a fuel supply system according to a first embodiment of the present invention.

Fig. 2    is a functional block diagram of the control device in the first embodiment.

Fig. 3    is a flowchart of the measured flow rate abnormality determination in the first embodiment.

Fig. 4    is a flowchart of the control at the time of measured flow rate abnormality in the first embodiment.

Fig. 5    is a schematic configuration diagram of a fuel cell system according to a second embodiment of the present invention.

Fig. 6    is a functional block diagram of the control device in the second embodiment.

Fig. 7    is a flowchart of the control at the time of measured flow rate abnormality in the second embodiment.

MODE FOR CARRYING OUT THE INVENTION

Hereinafter, embodiments of the present invention will be described in detail.

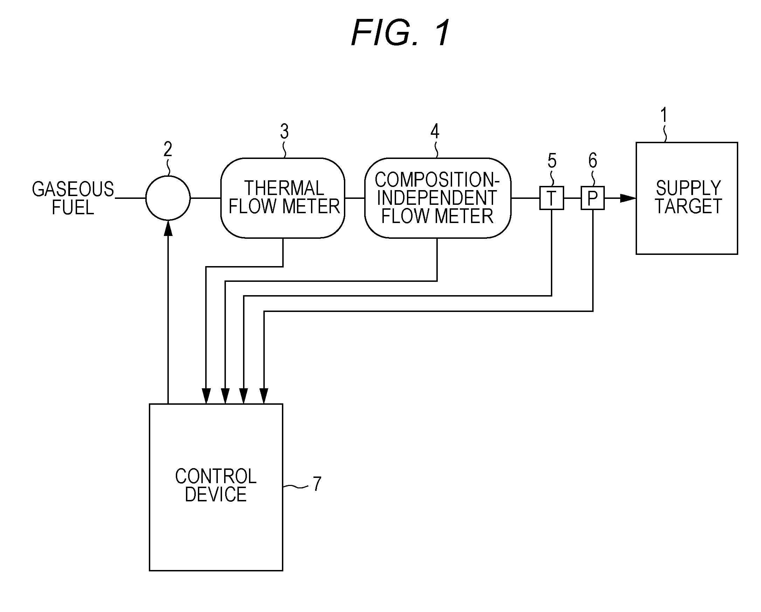

First, an embodiment in which the present invention as a first embodiment of the present invention is applied to a general-purpose fuel supply system will be described with reference to Figs. 1 to 4.

Fig. 1 is a schematic configuration diagram of a fuel supply system according to the first embodiment of the present invention.

The fuel supply system of the present embodiment is configured to include a fuel supply device 2 that supplies a hydrocarbon-based gaseous fuel to a supply target (various types of gas equipment) 1. In the present embodiment, especially, it is assumed to supply city gas derived from natural gas as the gaseous fuel.

The fuel supply device 2 is constituted by a flow rate control valve or the like connected to the gaseous fuel supply source, and the supply amount thereof is controlled based on a signal from a control device 7.

In a supply pathway of the gaseous fuel supplied from the fuel supply device 2 to the supply target 1, a thermal flow meter (thermal mass flow meter) 3, a composition-independent flow meter 4, a fuel temperature sensor 5, and a fuel pressure sensor 6 are provided.

The thermal flow meter 3 is intended to measure the flow rate using a thermal diffusion effect of the gas, and since the amount of heat transmitted by the gas varies based on the compression degree of the gas, it is possible to measure a mass flow rate. Since the thermal flow meter 3 has characteristics in which the size reduction is easy and responsiveness is satisfactory due to the size reduction, the thermal flow meter 3 is used as a primary flow meter. However, since the output varies depending on a composition of gas to be measured, it is common to use the thermal flow meter 3 with adjustment for the specified composition of the gas to be measured.

The composition-independent flow meter 4 is a flow meter capable of measuring the flow rate without depending on the composition of the gas to be measured, and for example, it is possible to use a volumetric flow meter, an ultrasonic flow meter, a Coriolis flow meter, a vortex flow meter or the like. The composition-independent flow meter 4 is used as an auxiliary flow meter. The composition-independent flow meter 4 may be any one of the volumetric flow meter or the mass flow meter, but in the present embodiment, it will be described as being a volumetric flow meter.

The fuel temperature sensor 5 measures a fuel temperature Tf. The fuel pressure sensor 6 measures a fuel pressure Pf.

Measurement signals of the thermal flow meter 3, the composition- independent flow meter 4, the fuel temperature sensor 5, and the fuel pressure sensor 6 are sent to the control device 7.

The control device 7 is configured to include a microcomputer, performs arithmetic processing in accordance with a control program, and controls the operation of the fuel supply device 2, while reading signals from various sensors, including the thermal flow meter 3, the composition-independent flow meter 4, the fuel temperature sensor 5, and the fuel pressure sensor 6. The control device 7 may control various other devices, simultaneously with the control of the fuel supply device 2.

Next, the control of the supply amount of fuel of the control device 7 will be described.

In normal control, the target supply amount of fuel is mainly set according to target supply conditions, and the supply amount of the gaseous fuel is controlled via the fuel supply device 2. Here, feedback control is performed, referring to the measured flow rate of the thermal flow meter 3. In addition, the measured flow rate of the thermal flow meter 3 is used as another control parameter as necessary.

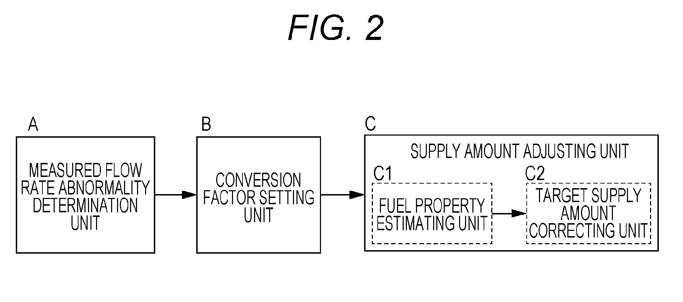

Meanwhile, in order to cope with the measured flow rate abnormality of the thermal flow meter 3, as illustrated in the functional block diagram in Fig. 2, the control device 7 is equipped with a measured flow rate abnormality determination unit A configured to determine whether there is an abnormal state based on a degree of difference between the measured value of the thermal flow meter 3 and the measured value of the composition-independent flow meter 4, a conversion factor setting unit B configured to set a conversion factor with respect to the measured value of the thermal flow meter 3 when it is determined that there is the abnormal state, and a supply amount adjusting unit C configured to adjust the supply amount of the gaseous fuel supplied by the fuel supply device 2 based on the conversion factor.

The measured flow rate abnormality determination unit A determines that there is an abnormal state (the measured value of the thermal flow meter 3 is different from the actual flow rate), when the measured value of the thermal flow meter 3 and the measured value of the composition-independent flow meter 4 differ from each other by a certain degree or higher.

The conversion factor setting unit B sets the conversion factor based on the ratio of the measured value of the composition-independent flow meter 4 and the measured value of the thermal flow meter 3.

The supply amount adjusting unit C is configured to include a fuel property estimating unit C1 configured to estimate the fuel properties of the gaseous fuel on the basis of the conversion factor set by the conversion factor setting unit B, and a target supply amount correcting unit C2 configured to correct a target supply amount of the gaseous fuel on the basis of the estimated fuel properties.

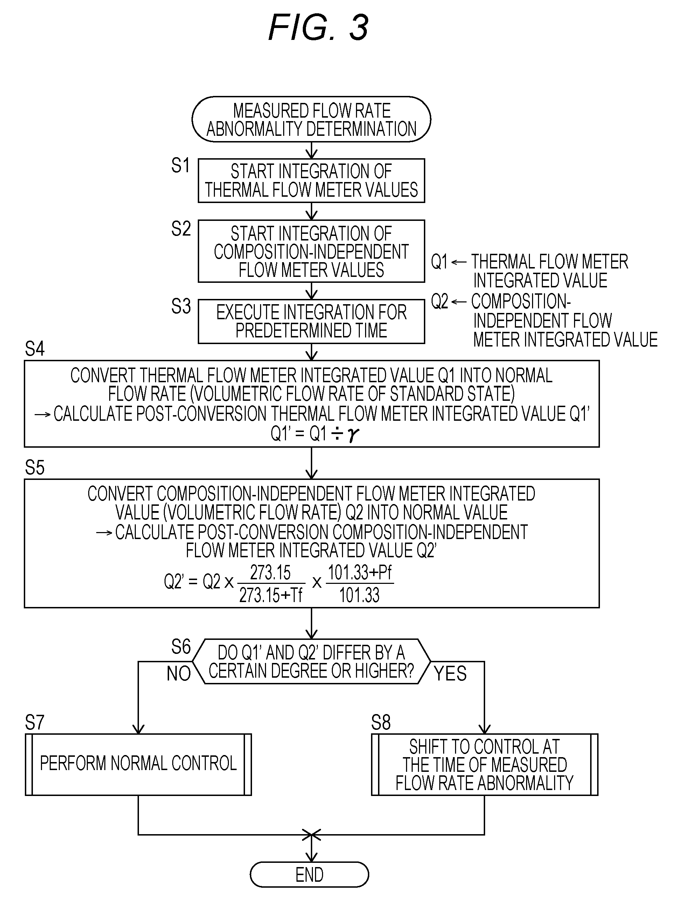

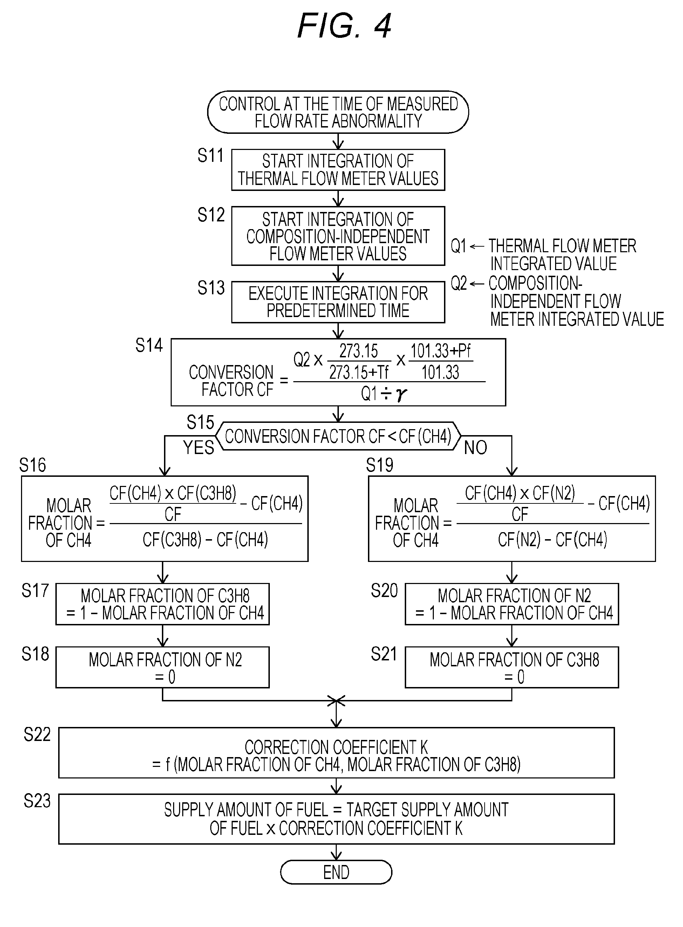

Here, the function of the measured flow rate abnormality determination unit A is achieved by the flowchart of Fig. 3, and the functions of the conversion factor setting unit B and the supply amount adjusting unit C are achieved by the flowchart of Fig. 4.

Fig. 3 is a flowchart of the measured flow rate abnormality determination.

In S1, the integration of the measured values (thermal flow meter values) of the thermal flow meter 3 starts.

In S2, the integration of the measured values (composition-independent flow meter values) of the composition-independent flow meter 4 starts.

In S3, these integrations are executed for a predetermined time period to obtain a thermal flow meter integrated value (mass flow rate) Q1 and a composition- independent flow meter integrated value (volumetric flow rate) Q2, as the final integrated values.

In S4, the thermal flow meter integrated value (mass flow rate) Q1 is converted into a normal flow rate (volumetric flow rate of the standard state). More specifically, a post-conversion thermal flow meter integrated value Q1' is calculated by the following formula.

$$\text{post-conversion thermal flow meter integrated value } Q1' = Q1 \div \gamma$$

That is, the thermal flow meter integrated value Q1 is divided by specific gravity $\gamma$ (the specific gravity at the standard state in the design gas composition), to be converted into a volumetric flow rate (Q1') at the standard state.

In S5, the composition-independent flow meter integrated value (volumetric flow rate) Q2 is converted into a normal value. More specifically, a post-conversion composition-independent flow meter integrated value Q2' is calculated by the following formula.

$$\text{post-conversion composition-independent flow meter integrated value}$$
$$Q2' = Q2 \times (273.15 \div (273.15 + Tf)) \times ((101.33 + Pf) \div 101.33)$$

That is, the composition-independent flow meter integrated value (volumetric flow rate) Q2 is converted into the flow rate (Q2') at the standard (normal) state using the fuel temperature Tf and the fuel pressure Pf. The fuel temperature Tf and the fuel pressure Pf are the respective measured values of the fuel temperature sensor 5 and the fuel pressure sensor 6.

In S6, it is determined whether the post-conversion thermal flow meter integrated value Q1' and the post-conversion composition-independent flow meter integrated value Q2' differ from each other by a certain degree or higher.

More specifically, it is determined whether there is a relationship of " |Q1' - Q2' | /Q2' > predetermined value" or"| Q2' - Q1'| /Q1' > predetermined value". It may be determined simply whether "|Q1'-Q2'| > predetermined value."

Furthermore, the conversion factor CF may be calculated as in S14 in the flowchart of Fig. 4 to be described later to determine whether "the conversion factor CF is a predetermined upper limit value or more or a predetermined lower limit value or less."

As a result of this determination, in the case of NO (when there is no difference), the flow proceeds to S7 to execute the normal control. In contrast, in the case of YES (when there is a difference), it is determined that the measured value of the thermal flow meter 3 is different from the actual flow rate, the flow proceeds to S8 and shifts to the control at the time of measured flow rate abnormality (flow of Fig. 4).

Fig. 4 is a flowchart of the control at the time of measured flow rate abnormality (control of supply amount of fuel at the time of abnormality determination).

In S11, the integration of the measured values (thermal flow meter values) of the thermal flow meter 3 starts.

In S12, the integration of the measured values (composition-independent flow meter values) of the composition-independent flow meter 4 starts.

In S13, these integrations are executed for a predetermined time period to obtain the thermal flow meter integrated value (mass flow rate) Q1 and the composition-independent flow meter integrated value (volumetric flow rate) Q2, as the final integrated values.

In S14, the conversion factor CF is calculated by the following formula.

$$\text{Conversion factor } CF = [Q2 \times (273.15 \div (273.15 + Tf)) \times ((101.33 + Pf) \div 101.33)]/[Q1 \div \gamma]$$

In other words, in the same manner as S4 and S5 of the flowchart of Fig. 3, the post-conversion thermal flow meter integrated value Q1' and the post-conversion composition-independent flow meter integrated value Q2' are calculated, and a ratio thereof is calculated, to obtain a conversion factor CF = Q2'/Q1'.

That is, the thermal flow meter integrated value (mass flow rate) Q1 is converted into the normal flow rate (volumetric flow rate of the standard state). More specifically, the post-conversion thermal flow meter integrated value Q1' is calculated by the following formula.

$$\text{post-conversion thermal flow meter integrated value } Q1' = Q1 \div \gamma$$

That is, the thermal flow meter integrated value Q1 is divided by the specific gravity $\gamma$ (the specific gravity at the standard state in the design gas composition) and is converted into the volumetric flow rate (Q1') at the standard state.

In addition, the composition-independent flow meter integrated value (volumetric flow rate) Q2 is converted into the normal value. More specifically, the post-conversion composition-independent flow meter integrated value Q2' is calculated by the following formula.

$$\text{post-conversion composition-independent flow meter integrated value}$$
$$Q2' = Q2 \times (273.15 \div (273.15 + Tf)) \times ((101.33 + Pf) \div 101.33)$$

That is, the composition-independent flow meter integrated value (volumetric flow rate) Q2 is converted into the flow rate (Q2') at the standard (normal) state using the fuel temperature Tf and the fuel pressure Pf. The fuel temperature Tf and the fuel pressure Pf are the respective measured values of the fuel temperature sensor 5 and the fuel pressure sensor 6.

Moreover, after conversion thereof, the ratio of the post-conversion thermal flow meter integrated value Q1' and the post-conversion composition-independent flow meter integrated value Q2' (see the following formula) is calculated, to obtain the conversion factor CF.

$$\text{Conversion factor } CF = Q2'/Q1'$$

In S15, it is determined whether the conversion factor CF is less than the conversion factor CF(CH4) = 0.74 of methane CH4. The purpose of this is to approximate the composition by the determined results.

When the conversion factor CF is less than the conversion factor CF(CH4) of methane CH4 (i.e., CF < CF(CH4)), the flow proceeds to S16 to S18. In this case, it is estimated that the gas consists of two ingredients, methane CH4 and propane C3H8, and the molar fractions of these ingredients are calculated.

In S16, the molar fraction of methane CH4 is calculated from the conversion factor CF obtained in S14, the conversion factor CF(CH4) = 0.74 of methane CH4, and the conversion factor CF(C3H8) = 0.34 of propane C3H8, by the following formula.

$$\text{Molar fraction of CH4} = [CF(CH4) \times CF(C3H8)/CF - CF(CH4)]/[CF(C3H8) - CF(CH4)]$$

This formula is obtained in the following manner.

$$\text{Conversion factor} = 1/\Sigma(\text{volumetric fraction of ingredient i/conversion factor of ingredient i})$$

When using two ingredients, CH4 and C3H8, setting the volumetric fraction = molar fraction while ignoring a compression factor, and setting the molar fraction of CH4 to X, the molar fraction of C3H8 becomes 1 - X. Thus, the following is obtained.

$$CF = 1/[X/CF(CH4) + (1 - X)/CF(C3H8)]$$

Furthermore, by solving this in regard to X, the above formula can be obtained.

In S17, the molar fraction of propane C3H8 is calculated from the molar fraction of methane CH4 obtained in S16, by the following formula.

$$\text{Molar fraction of C3H8} = 1 - \text{molar fraction of CH4}$$

In S18, under the above-described estimation, the molar fraction of nitrogen N2 is set to 0 as in the following formula.

$$\text{Molar fraction of N2} = 0$$

When the conversion factor CF is greater than the conversion factor CF(CH4) of methane CH4 (i.e., CF > CF(CH4)), the flow proceeds to S19 to S21. In this case, it is estimated that the gas consists of two ingredients, methane CH4 and nitrogen N2, and the molar fractions of these ingredients are calculated.

In S19, the molar fraction of methane CH4 is calculated from the conversion factor CF obtained in S14, the conversion factor CF(CH4) = 0.74 of methane CH4, and the conversion factor CF(N2) = 1.00 of nitrogen N2, by the following formula.

$$\text{Molar fraction of CH4} = [CF(CH4) \times CF(N2)/CF - CF(CH4)]/[CF(N2) - CF(CH4)]$$

This formula is also obtained in the same manner as described above.

In S20, the molar fraction of nitrogen N2 is calculated from the molar fraction of methane CH4 obtained in S19, by the following formula.

$$\text{Molar fraction of N2} = 1 - \text{molar fraction of CH4}$$

In S21, under the above-described estimation, the molar fraction of propane C3H8 is set to 0 as in the following formula.

$$\text{Molar fraction of C3H8} = 0$$

After calculation of the molar fractions in S16 to S18 or S19 to S21, the flow proceeds to S22.

In S22, a correction coefficient K with respect to the supply amount of fuel is calculated using a predetermined function f, based on the composition (the molar fraction of methane CH4 and the molar fraction of propane C3H8) of the gaseous fuel estimated as described above (see the following formula).

$$\text{Correction coefficient } K = f (\text{molar fraction of CH4, the molar fraction of C3H8})$$

Each of the actual molar fractions (estimated values) of methane CH4 and propane C3H8 may be regarded as a deviation with respect to each of the molar fractions (design values) of methane CH4 and propane C3H8 in the design gas composition.

In S23, the target supply amount of fuel (target supply amount of fuel in the normal control) based on the target supply conditions is corrected by the correction coefficient K obtained in S22, thereby obtaining a final supply amount of fuel (see the following formula).

$$\text{Supply amount of fuel} = \text{target supply amount of fuel} \times \text{correction coefficient K}$$

The supply amount of fuel calculated in this way is set as a target value for control, and the control of the supply amount of fuel is performed via the fuel supply device 2.

According to the present embodiment, since the measured flow rate abnormality determination unit A configured to determine whether there is an abnormal state based on the degree of difference between the measured value of the thermal flow meter 3 and the measured value of the composition-independent flow meter 4, the conversion factor setting unit B configured to set the conversion factor CF with respect to the measured value of the thermal flow meter 3 when it is determined that there is the abnormal state, and a supply amount adjusting unit C configured to adjust the supply amount of gaseous fuel supplied by the fuel supply device 2 based on the conversion factor CF are provided, an appropriate amount of fuel can be supplied even when the composition of the gaseous fuel varies.

In particular, the composition-independent flow meter 4 disposed in series with the thermal flow meter 3 in the supply pathway of the gaseous fuel and that is capable of measuring the flow rate without depending on the composition of the gaseous fuel is provided, and the measured flow rate abnormality determination unit A determines that there is an abnormal state when the measured value of the thermal flow meter 3 and the measured value of the composition-independent flow meter 4 differ from each other by a certain degree or higher. Thus, the abnormality determination can be performed appropriately.

Furthermore, according to the present embodiment, the conversion factor setting unit B sets the conversion factor CF based on the ratio of the measured value of the composition-independent flow meter 4 and the measured value of the thermal flow meter 3. Thus, the flow rate correction using the conversion factor CF can be performed.

Furthermore, according to the present embodiment, the supply amount adjusting unit C includes a fuel property estimating unit C1 configured to estimate the fuel properties of the gaseous fuel on the basis of the conversion factor CF set by the conversion factor setting unit B, and the target supply amount correcting unit C2 configured to correct a target supply amount of the gaseous fuel on the basis of the estimated fuel properties. Thus, it is possible to perform the appropriate control based on the estimation of fuel properties of the gaseous fuel.

Furthermore, according to the present embodiment, the fuel property estimating unit C1 specifies the sub-ingredient from the predetermined sub-ingredient candidates ($C_3H_8$, $N_2$) depending on the result of comparison between the conversion factor CF set by the conversion factor setting unit B and the conversion factor CF($CH_4$) previously determined for the main ingredient ($CH_4$) of the gaseous fuel, and obtains the molar fractions of the main ingredient and the specified sub-ingredient, based on the conversion factor CF set by the conversion factor setting unit B, and the conversion factors CF($CH_4$) and CF($C_3H_8$) or CF($N_2$) previously determined for the main ingredient and the specified sub-ingredient. Thus, the practically sufficient estimation accuracy can be achieved.

It is desirable that the sub-ingredient candidates are a combustible ingredient (propane $C_3H_8$ or butane $C_4H_{10}$) having the calorific value different from that of the main ingredient (methane $CH_4$) of the gaseous fuel, and an incombustible ingredient (nitrogen $N_2$).

Furthermore, the present embodiment has the following advantages in comparison with the techniques described in Patent Document 1 to 3.

(1) In comparison with Patent Document 1

It is possible to discriminate the gas species in the whole region where the flow occurs. Furthermore, since the estimation of the gas species is also performed, it is possible to cope with the dynamic variation in gas composition.

(2) In comparison with Patent Document 2

By including the conversion factor setting unit, even when it is not possible to obtain the composition of the gas mixture in advance, it is possible to obtain a conversion factor. In addition, it is possible to estimate the gas composition from the conversion factor.

(3) In comparison with Patent Document 3

By using the flow meter installed in the supply pathway of the gaseous fuel, it is possible to specify the fuel properties in advance. As a result, the usage can be widened, and further, there is no need to execute additional operation for adjustment or the like.

Furthermore, in the present embodiment, as the fuel properties, the molar fraction of the gaseous ingredient is calculated on the basis of the conversion factor CF, and this molar fraction is used as a parameter to calculate the correction value (correction coefficient) with respect to the supply amount of fuel. However, other parameters representing the fuel properties may be used, or the conversion factor CF itself may be used as a parameter to calculate the correction value with respect to the supply amount of fuel.

Furthermore, in the above-described embodiment, the supply target (gas equipment) of the fuel supply system was not described, but the supply target is not particularly limited and the fuel supply system can be used as a general-purpose fuel supply system. Referring to the applications, it is possible to include the combustion application requiring the control of the air-fuel ratio, and the chemical reaction application requiring the grasp of the raw material composition. Examples of individual combustion applications may include a boiler or a gas engine. The gas engine is used for a household cogeneration system (a system, in which a gas engine fueled by city gas or LPG performs power generation, and heat generated thereby is used to supply hot water; common name "ECOWILL (R)"), a GHP system (an air conditioning system that drives a compressor by a gas engine and performs cooling and heating by heat-pump operation), an industrial private power generation system, or the like. Examples of the individual chemical reaction applications may include a synthetic gas manufacturing device. The synthetic gas manufacturing device uses natural gas, LPG or the like as a raw material, and produces the synthetic gas mainly containing H2 and CO, using various reforming methods. The produced synthetic gas is used as a raw material gas for ammonia synthesis, methanol synthesis or the like. Recently, a demand for synthetic gas in association with new energy production such as GTL, DME, or SNG has been focused.

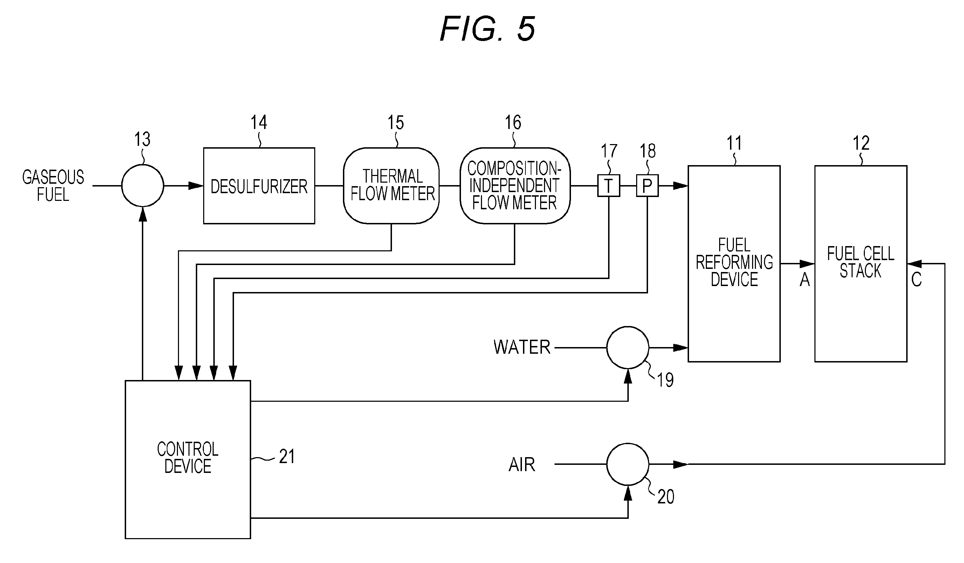

Next, an embodiment in which the present invention as a second embodiment of the present invention is applied to a fuel cell system will be described with reference to Figs. 5 to 7.

Fig. 5 is a schematic configuration diagram of a fuel cell system according to the second embodiment of the present invention.

The fuel cell system of the present embodiment is configured to include a fuel reforming device 11 configured to generate a reformed hydrogen-rich fuel by performing the steam reforming of the hydrocarbon-based gaseous fuel, and a fuel cell stack (an assembly of fuel cells) 12 configured to generate electricity by electrochemical reaction between the reformed fuel (hydrogen) from the fuel reforming device 11 and air (oxygen).

As the gaseous fuel supplied to the fuel reforming device 11, in this embodiment, city gas derived from natural gas is used and is supplied by a fuel supply device 13.

The fuel supply device 13 is constituted by a flow rate control valve or the like connected to the gaseous fuel supply source, and a supply amount of the gaseous fuel is controlled based on a signal from a control device 21.

In the supply pathway of the gaseous fuel supplied from the fuel supply device 13 to the fuel reforming device 11, a desulfurizer 14, a thermal flow meter (a thermal mass flow meter) 15, a composition-independent flow meter 16, a fuel temperature sensor 17, and a fuel pressure sensor 18 are provided.

The desulfurizer 14 desulfurizes and removes sulfur compounds contained in the gaseous fuel.

Since the thermal flow meter 15, the composition-independent flow meter 16, the fuel temperature sensor 17, and the fuel pressure sensor 18 are the same as the thermal flow meter 3, the composition-independent flow meter 4, the fuel temperature sensor 5, and the fuel pressure sensor 6 of the first embodiment (Fig. 1), the description thereof will not be provided.

Measurement signals of the thermal flow meter 15, the composition-independent flow meter 16, the fuel temperature sensor 17, and the fuel pressure sensor 18 are sent to the control device 21.

The for-reforming water for performing the steam reforming in the fuel reforming device 11 is supplied by a for-reforming-water supply device 19. The for-reforming-water supply device 19 is constituted by a pump and/or a flow rate control valve or the like connected to a water supply source, and a supply amount of the for-reforming water is controlled based on the signal from the control device 21.

The reformed fuel from the fuel reforming device 11 is supplied to an anode (A) of the fuel cell stack 12, and air is supplied to a cathode (C) thereof. The cathode air is supplied by a cathode-air supply device 20. The cathode air supply device 20 is constituted by a pump (blower) and/or a flow rate control valve or the like connected to an air supply source, and a supply amount of the cathode air is controlled based on the signal from the control device 21.

The control device 21 is configured to include a microcomputer, performs the arithmetic processing in accordance with a control program, and controls the operations of various devices, including the fuel supply device 13, the for-reforming- water supply device 19, and the cathode-air supply device 20, while reading signals from various sensors, including the thermal flow meter 15, the composition- independent flow meter 16, the fuel temperature sensor 17, and the fuel pressure sensor 18.

In the fuel reforming device 11, in a case of methane CH4, the steam reforming reaction of Formula (1) described below is carried out, and in a case of propane C3H8, the steam reforming reaction of Formula (2) described below is carried out.

$$CH_4 + 2H_2O \rightarrow CO_2 + 4H_2 \qquad (1)$$

$$C3H8 + 6H2O \rightarrow 3CO2 + 10H2 \qquad (2)$$

In the fuel cell stack 12, the electrode reaction of Formula (3) described below occurs at the cathode of each cell, and the electrode reaction of Formula (4) described below occurs at the anode, thereby performing the power generation.

$$Cathode: 1/2O2 + 2e^- \rightarrow O2^- (solid\ electrolyte) \qquad (3)$$

$$Anode: O2^- (solid\ electrolyte) + H2 \rightarrow H2O + 2e^- \qquad (4)$$

Next, the control of fuel, the for-reforming water, and the cathode air using the control device 21 will be described.

In the normal control, the supply amount of fuel (target value) is set primarily according to a target power generation condition and the supply amount of the gaseous fuel is controlled via the fuel supply device 13. Here, feedback control is performed, referring to the measured flow rate of the thermal flow meter 15. Furthermore, the supply amount of the for-reforming water (target value) is set, referring to the measured flow rate of the thermal flow meter 15, for example, and the supply amount of the for-reforming water is controlled via the for-reforming-water supply device 19. Furthermore, the supply amount of cathode air (target value) is set according to the target power generation condition or referring to the measured flow rate of the thermal flow meter 15, and the supply amount of the cathode air is controlled via the cathode air supply device 20.

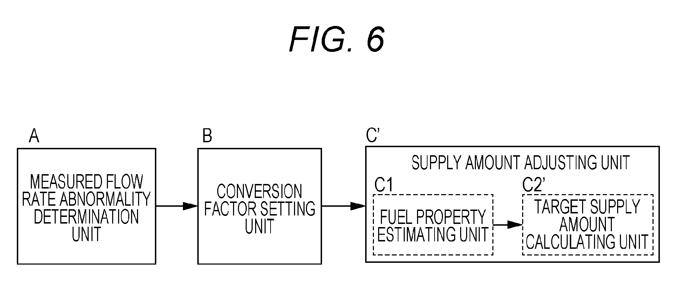

Meanwhile, in order to cope with the measured flow rate abnormality of the thermal flow meter 15, as illustrated in the functional block diagram in Fig. 6, the control device 21 is equipped with a measured flow rate abnormality determination unit A configured to determine whether there is an abnormal state based on the degree of difference between the measured value of the thermal flow meter 15 and the measured value of the composition-independent flow meter 16, a conversion factor setting unit B configured to set a conversion factor with respect to the measured value of the thermal flow meter 15 when it is determined that there is the abnormal state, and a supply amount adjusting unit C' configured to adjust the supply amount of the gaseous fuel and the supply amount of the for-reforming water supplied by the fuel supply device 13 and the for-reforming-water supply device 19, based on the conversion factor.

The measured flow rate abnormality determination unit A determines that there is an abnormal state (the measured value of the thermal flow meter 15 is different from the actual flow rate), when the measured value of the thermal flow meter 15 and the measured value of the composition-independent flow meter 16 differ from each other by a certain degree or higher.

The conversion factor setting unit B sets the conversion factor based on the ratio of the measured value of the composition-independent flow meter 16 and the measured value of the thermal flow meter 15.

The supply amount adjusting unit C' is configured to include a fuel property estimating unit C1 configured to estimate the fuel properties of the gaseous fuel on the basis of the conversion factor set by the conversion factor setting unit B, and a target supply amount calculating unit C2' configured to calculate a target supply amount of the gaseous fuel and a target supply amount of the for-reforming water, based on the estimated fuel properties and the target power generation conditions.

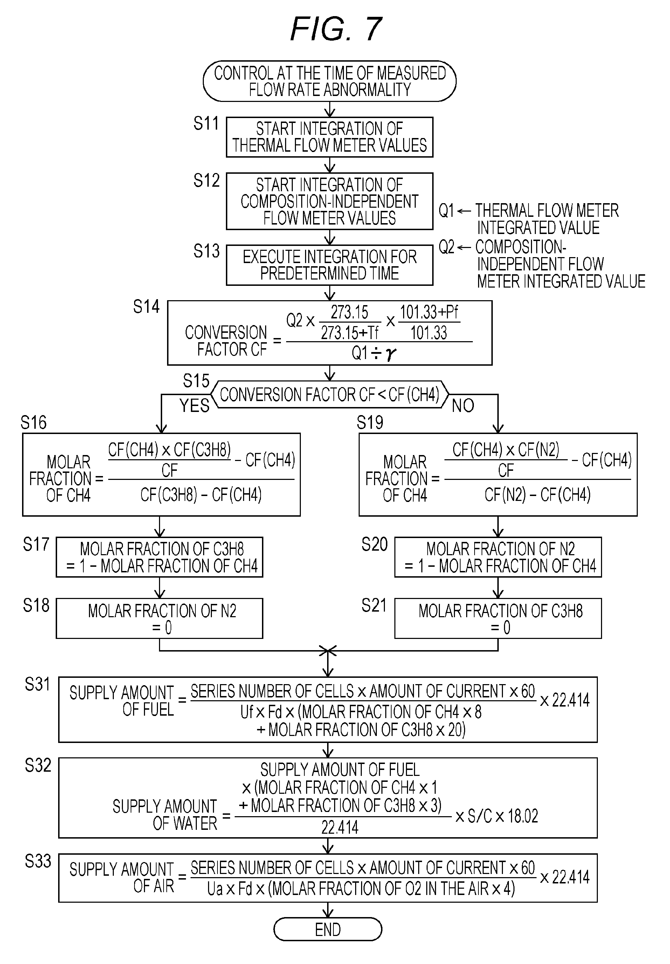

Here, since a flowchart for achieving the function of the measured flow rate abnormality determination unit A is basically the same as that of Fig. 3, the description thereof will not be provided. Functions of the conversion factor setting unit B and the supply amount adjusting unit C' are achieved by the flowchart of Fig. 7.

Fig. 7 is a flowchart of the control at the time of measured flow rate abnormality determination (control of the supply amounts of fuel, the for-reforming water, and the cathode air at the time of the abnormality determination). Furthermore, since S11 to S21 of Fig. 7 are basically the same as S11 to S21 of Fig. 4, the same step reference numerals are denoted.

In S11, the integration of the measured values (thermal flow meter values) of the thermal flow meter 15 starts.

In S12, the integration of the measured values (composition-independent flow meter values) of the composition-independent flow meter 16 starts.

In S13, these integrations are executed for a predetermined time period to obtain a thermal flow meter integrated value (mass flow rate) Q1 and a composition-independent flow meter integrated value (volumetric flow rate) Q2, as the final integrated values.

In S14, the conversion factor CF is calculated by the following formula.

$$\text{Conversion factor } CF = [Q2 \times (273.15 \div (273.15 + Tf)) \times ((101.33 + Pf) \div 101.33)]/[Q1 \div \gamma]$$

11

In S15, it is determined whether the conversion factor CF is less than the conversion factor CF(CH4) = 0.74 of methane CH4. The purpose of this is to approximate the composition by the results of determination.

When the conversion factor CF is less than the conversion factor CF(CH4) of methane CH4 (i.e., CF < CF(CH4)), the flow proceeds to S16 to S18. In this case, it is estimated that the gas consists of two ingredients, methane CH4 and propane C3H8, and the molar fractions of these ingredients are calculated.

In S16, the molar fraction of methane CH4 is calculated from the conversion factor CF obtained in S14, the conversion factor CF(CH4) = 0.74 of methane CH4, and the conversion factor CF(C3H8) = 0.34 of propane C3H8, by the following formula.

$$\text{Molar fraction of CH4} = [CF(CH4) \times CF(C3H8)/CF - CF(CH4)]/[CF(C3H8) - CF(CH4)]$$

In S17, the molar fraction of propane C3H8 is calculated from the molar fraction of methane CH4 obtained in S16, by the following formula.

$$\text{Molar fraction of C3H8} = 1 - \text{molar fraction of CH4}$$

In S18, under the above-described estimation, the molar fraction of nitrogen N2 is set to 0 as in the following formula.

$$\text{Molar fraction of N2} = 0$$

When the conversion factor CF is greater than the conversion factor CF(CH4) of methane CH4 (i.e., CF > CF(CH4)), the flow proceeds to S19 to S21. In this case, it is estimated that the gas consists of two ingredients, methane CH4 and nitrogen N2, and the molar fractions of these ingredients are calculated.

In S19, the molar fraction of methane CH4 is calculated from the conversion factor CF obtained in S14, the conversion factor CF(CH4) = 0.74 of methane CH4, and the conversion factor CF(N2) = 1.00 of nitrogen N2, by the following formula.

$$\text{Molar fraction of CH4} = [CF(CH4) \times CF(N2)/CF - CF(CH4)]/[CF(N2) - CF(CH4)]$$

In S20, the molar fraction of nitrogen N2 is calculated from the molar fraction of methane CH4 obtained in S19, by the following formula.

$$\text{Molar fraction of N2} = 1 - \text{molar fraction of CH4}$$

In S21, under the above-described estimation, the molar fraction of propane C3H8 is set to 0 as in the following formula.

$$\text{Molar fraction of C3H8} = 0$$

After calculation of the molar fractions in S16 to S18 or S19 to S21, the flow proceeds to S31.

In S31, the supply amount of fuel (target value) is calculated by the following formula from the target power generation conditions (amount of sweep DC current), and the composition (molar fraction of methane CH4 and molar fraction of propane C3H8) of the gaseous fuel.

$$\text{Supply amount of fuel} = [\text{the number of cells connected in series} \times \text{current amount} \times 60]/[\text{Uf} \times \text{Fd} \times (\text{molar fraction of CH4} \times 8 + \text{molar fraction of C3H8} \times 20)] \times 22.414$$

Here, Uf is a predetermined fuel utilization factor (target value, for example 0.85), Fd is the Faraday constant (96485.3399), and "22.414" is a molar volume (L/mol). Furthermore, "8" is the number of hydrogen atoms generated by the steam reforming reaction of methane CH4, and "20" is the number of hydrogen atoms generated by the steam reforming reaction of propane C3H8 (see, the above-described steam reforming reaction formula).

In S32, a supply amount of the for-reforming water (target value) is calculated from the supply amount of fuel and the composition of the fuel gas (molar fraction of methane CH4 and molar fraction of propane C3H8), by the following formula.

$$\text{Supply amount of water} = \text{supply amount of fuel} \times (\text{molar fraction of CH4} \times 1 + \text{molar fraction of C3H8} \times 3)/22.414 \times \text{S/C} \times 18.02$$

Here, "1" in the formula is the number of carbon of methane CH4, "3" is the number of carbon of propane C3H8, "22.414" is the molar volume (L/mol), S/C is a steam-carbon ratio (in the target value, for example, 2.5), and "18.02" is the molecular weight of water vapor.

In S33, a supply amount of cathode air (target value) is calculated by the following formula.

$$\text{Amount of air supply} = [\text{the number of cells connected in series} \times \text{the amount of current} \times 60]/[\text{Ua} \times \text{Fd} \times (\text{molar fraction of O2 in the air} \times 4)] \times 22.414$$

Here, Ua is a predetermined rate of air utilization (target value, for example, 0.30), Fd is the Faraday constant (96485.3399), and "22.414" is a molar volume (L/mol). Furthermore, "4" is the number of electrons generated from 02 due to the electrode reaction (see, the above-described electrode reaction formula).

Although the supply amount of cathode air is calculated based on the target power generation condition in this case, it may be calculated based on the supply amount of fuel and the air-fuel ratio.

The supply amount of fuel, the supply amount of for-reforming water, and the supply amount of cathode air calculated in this way are set as the control target values, respectively, and the controls thereof are performed via the fuel supply device 13, the for-reforming-water supply device 19, and the cathode air supply device 20.

According to the present embodiment, since in the fuel cell system, the measured flow rate abnormality determination unit A configured to determine whether there is an abnormal state based on the degree of difference between the measured value of the thermal flow meter 15 and the measured value of the composition- independent flow meter 16, the conversion factor setting unit B configured to set the conversion factor CF with respect to the measured value of the thermal flow meter 15 when it is determined that there is the abnormal state, and the supply amount adjusting unit C' configured to adjust the supply amount of the gaseous fuel and the supply amount of the for-reforming water supplied by the fuel supply device 13 and the for-reforming-water supply device 19 based on the conversion factor CF are provided, the appropriate amount of fuel and for-reforming water can be supplied even when the composition of the gaseous fuel varies.

Furthermore, according to the present embodiment, the supply amount adjusting unit C' includes the fuel property estimating unit C1 configured to estimate the fuel properties of the gaseous fuel on the basis of the conversion factor CF set by the conversion factor setting unit B, and a target supply amount calculating unit C2' configured to calculate the target supply amount of gaseous fuel and the target supply amount of the for-reforming water on the basis of the estimated fuel properties and the target power generation conditions. Thus, the appropriate control of the gaseous fuel and the for-reforming water, based on the estimation of the fuel properties of the gaseous fuel, can be performed.

Furthermore, the present embodiment also has the following advantages in comparison with the techniques described in the following documents.

(1) Japanese Patent Application Laid-open Publication No. 2006-049056

In this technique, in a fuel cell system supplied with fuel having variable properties (composition or calorific value), means for measuring properties (composition or calorific value) and a flow rate of fuel, means for determining the state of the fuel cells, and means for controlling output of the fuel cells are included. Thermal self-sustaining operation of the fuel cells is maintained by computing optimal control parameters from the measurements and the determination results.

However, in order to constitute the means for measuring properties (composition or calorific value) and the flow rate of the fuel, for example, it is necessary to combine a calorimeter for the calorific value and combine a mechanism of gas chromatography for the composition, which makes the configuration of the device complex and expensive.

In contrast, in the present embodiment, since the supply amount adjusting unit is provided, it is possible to appropriately supply fuel and for-reforming water, without using the expensive equipment such as the calorimeter and the gas chromatography.

(2) Japanese Patent Application Laid-open Publication No. 2010-272213

In this technique, a generated current of a fuel cell stack and a flow rate of gas mixture (gas mixture of methane and carbon dioxide gas) supplied through a fuel supply pathway are controlled, based on measured values of a thermal mass flow meter and differential pressure measuring means (differential pressure type flow meter).

However, since the measured values of the thermal mass flow meter are used as true values, when the gas having the composition indicating a flow rate different from that of methane is mixed, the thermal mass flow meter does not indicate the correct value. Thus, the premise becomes incorrect, and the normal control cannot be expected.

In contrast, in the present embodiment, since it is possible to correct the mass flow rate measured with the thermal flow meter by the conversion factor setting unit, the present embodiment is applicable to majority of ingredients having the conversion factor that does not match that of methane.

(3) Japanese Patent Application Laid-open Publication No. 2004-059337

In this technique, a gaseous fuel density is measured based on a ratio of a volumetric flow rate measured by a volumetric flow meter to a mass flow rate measured by a mass flow meter, a composition (the average number of carbon atoms and the average number of hydrogen atoms of a gaseous fuel molecular) of a gaseous fuel is obtained from the gaseous fuel density, and an appropriate amount of water is supplied for steam reforming.

However, since the gaseous fuel is assumed to contain only carbon atoms and hydrogen atoms, when an inert gas (such as N2) is mixed and when other elements are contained, it is not possible to perform the estimation of the composition. Furthermore, in a case of using a thermal flow meter as a mass flow meter, when the composition of gaseous fuel varies, the thermal flow meter does not indicate the correct values, and accordingly, the appropriate control cannot be performed.

In contrast, in the present embodiment, since the suitable values of the suitable gas ingredients are used to obtain the conversion factor used in the supply amount adjusting unit, the estimation of the gas composition can be performed even when the inert gas is mixed and when other elements are contained. Furthermore, since it is possible to correct the mass flow rate measured by the thermal flow meter using the conversion factor setting unit, it is possible to perform the appropriate fuel supply even when the gas composition varies.

Furthermore, although in the above-described embodiment, the gaseous fuel is city gas, the main ingredient of the gaseous fuel is CH4, and the sub-ingredient candidates are propane C3H8 (or butane C4H10) and nitrogen N2, the present invention is not limited thereto. For example, the gaseous fuel may be LPG or the like, instead of city gas, and the main ingredient of the gaseous fuel may be ethane C2H6, propane C3H8 or the like, instead of methane CH4.

Furthermore, even when the gaseous fuel is changed, for example, from city gas to LPG, or from LPG to city gas, the change in the gaseous fuel may be automatically detected to notify the change to the control device, and the control program may be changed in response to the change in the gaseous fuel by the control device.

Furthermore, as for city gas, it is also possible to apply the present invention to a gas mixed with a hydrocarbon gas derived from a bio-gas or derived from a shale gas, or a gas mixed with an off-gas (hydrocarbon gas that is not derived from natural gas) produced as a byproduct in petrochemical plants.

However, in any case, it is desirable to use the conversion factor in regard to three ingredients, that is, the main ingredient of the gaseous fuel, the combustible ingredient having the calorific value different from that of the main ingredient, and the incombustible ingredient.

Furthermore, in the above-described embodiments, the configuration has been described in which the thermal flow meter 3,15 is used as the primary flow meter, and the composition-independent flow meter 4,16 is used as the auxiliary flow meter, but the composition-independent flow meter 4,16 may be used as the primary flow meter, and the thermal flow meter 3,15 may be used as the auxiliary flow meter.

Furthermore, in the embodiment of the fuel cell system, when the supply device of for-reforming air is provided in order to jointly use the partial oxidation reaction as the reforming reaction, the supply amount of for-reforming air may be adjusted by the air amount adjusting unit C'.

In this case, the supply amount of the for-reforming air may be calculated, for example, by the following formula.

$$\text{Supply amount of for-reforming air} = \text{supply amount of fuel} \times (\text{molar fraction of } CH_4 \times 1 + \text{molar fraction of } C_3H_8 \times 3)/(\text{oxygen concentration in the air}) \times O/C$$

Here, O/C in the formula is an oxygen-carbon ratio.

Furthermore, the illustrated embodiments are intended to merely illustrate examples of the present invention, and it is needless to say that the present invention covers various improvements and modifications to be made by those skilled in the art within the scope of the appended claims, in addition to those directly illustrated by the described embodiments.

**REFERENCE SYMBOL LIST**

1    Supply target
2    Fuel supply device
3    Thermal flow meter
4    Composition-independent flow meter
5    Fuel temperature sensor
6    Fuel pressure sensor
7    Control device
11   Fuel reforming device
12   Fuel cell stack
13   Fuel supply device
14   Desulfurizer
15   Thermal flow meter
16   Composition-independent flow meter
17   Fuel temperature sensor
18   Fuel pressure sensor
19   For-reforming-water supply device
20   Cathode air supply device
21   Control device

**Claims**

1. A fuel supply system comprising: a fuel supply device configured to supply a hydrocarbon-based gaseous fuel to a supply target; a flow meter configured to measure a flow rate of the gaseous fuel supplied by the fuel supply device; and a control device to which a signal of the flow meter is input to control a supply amount of the fuel supply device, wherein the flow meter includes a thermal flow meter, and a composition-independent flow meter capable of measuring the flow rate without depending on a composition of the gaseous fuel, and

   wherein the control device includes

   a measured flow rate abnormality determination unit configured to determine whether there is an abnormal state, based on a degree of difference between a measured value of the thermal flow meter and a measured value of the composition-independent flow meter,
a conversion factor setting unit configured to set a conversion factor with respect to the measured value of the thermal flow meter when it is determined that there is the abnormal state, and
a supply amount adjusting unit configured to adjust a supply amount of the gaseous fuel supplied by the fuel supply device based on the conversion factor.

2. The fuel supply system according to claim 1,
wherein the conversion factor setting unit sets the conversion factor based on a ratio of the measured value of the composition-independent flow meter and the measured value of the thermal flow meter.

3. The fuel supply system according to claim 2,
wherein the supply amount adjusting unit includes a fuel property estimating unit configured to estimate the fuel properties of the gaseous fuel on the basis of the conversion factor set by the conversion factor setting unit, and a target supply amount correcting unit configured to correct a target supply amount of the gaseous fuel on the basis of the estimated fuel properties.

4. The fuel supply system according to claim 3,
wherein the fuel property estimating unit specifies a sub-ingredient from predetermined sub-ingredient candidates, depending on the result of comparison between the conversion factor set by the conversion factor setting unit and a conversion factor previously determined for a main ingredient of the gaseous fuel, and the fuel property estimating unit obtains molar fractions of the main ingredient and the specified sub-ingredient, based on the conversion factor set by the conversion factor setting unit, the conversion factor previously determined for the main ingredient and a conversion factor previously determined for the specified sub-ingredient.

5. The fuel supply system according to claim 4,
wherein the sub-ingredient candidates are a combustible ingredient having a calorific value different from that of the main ingredient of the gaseous fuel, and an incombustible ingredient.

6. A fuel cell system comprising a fuel reforming device configured to generate hydrogen-rich reformed fuel by performing steam reforming of a hydrocarbon-based gaseous fuel, a fuel cell stack configured to perform power generation by electrochemical reaction between the generated reformed fuel and air, a fuel supply device configured to supply the gaseous fuel to the reforming device, a for-reforming- water supply device configured to supply water for the steam reforming to the reforming device, a flow meter configured to measure a flow rate of the gaseous fuel supplied to the reforming device from the fuel supply device, and a control device to which a signal of the flow meter is input to control the respective supply amounts of the fuel supply device and the for-reforming-water supply device, wherein the flow meter includes a thermal flow meter, and a composition-independent flow meter capable of measuring the flow rate without depending on a composition of the gaseous fuel, and
wherein the control device includes
a measured flow rate abnormality determination unit configured to determine whether there is an abnormal state, based on a degree of difference between a measured value of the thermal flow meter and a measured value of the composition-independent flow meter,
a conversion factor setting unit configured to set a conversion factor with respect to the measured value of the thermal flow meter when it is determined that there is the abnormal state, and
a supply amount adjusting unit configured to adjust the supply amount of the gaseous fuel and the supply amount of water supplied by the fuel supply device and the for-reforming-water supply device based on the conversion factor.

7. The fuel cell system according to claim 6,
wherein the conversion factor setting unit sets the conversion factor based on a ratio of the measured value of the composition-independent flow meter and the measured value of the thermal flow meter.

8. The fuel cell system according to claim 7,
wherein the supply amount adjusting unit includes a fuel property estimating unit configured to estimate the fuel properties of the gaseous fuel on the basis of the conversion factor set by the conversion factor setting unit, and a target supply amount calculating unit configured to calculate the target supply amount of the gaseous fuel and the target supply amount of water on the basis of the estimated fuel properties and target power generation conditions.

9. The fuel cell system according to claim 8,
wherein the fuel property estimating unit specifies a sub-ingredient from predetermined sub-ingredient candidates, depending on the result of comparison between the conversion factor set by the conversion factor setting unit and a conversion factor previously determined for a main ingredient of the gaseous fuel, and the fuel property estimating unit obtains molar fractions of the main ingredient and the specified sub-ingredient, based on the conversion factor set by the conversion factor setting unit, the conversion factor previously determined for the main ingredient, and a conversion factor previously determined for the specified sub-ingredient.

10. The fuel cell system according to claim 9,
wherein the sub-ingredient candidates are a combustible ingredient having a calorific value different from that of the main ingredient of the gaseous fuel, and an incombustible ingredient.

11. A method of running a fuel supply system including: a fuel supply device configured to supply a hydrocarbon-based gaseous fuel to a supply target, and a flow meter configured to measure a flow rate of the gaseous fuel supplied by the fuel supply device, wherein the flow meter includes a thermal flow meter, and a composition-independent flow meter capable of measuring the flow rate without depending on a composition of the gaseous fuel,
in order to control a supply amount by the fuel supply device, the method of running the fuel supply system comprising:

   a measured flow rate abnormality determining step of determining whether there is an abnormal state, based on a degree of difference between a measured value of the thermal flow meter and a measured value of the composition-independent flow meter;
   a conversion factor setting step of setting a conversion factor with respect to the measured value of the thermal flow meter when it is determined that there is the abnormal state; and
   a supply amount adjusting step of adjusting the supply amount of the gaseous fuel supplied by the fuel supply device based on the conversion factor.

12. A method of running a fuel cell system including: a fuel reforming device configured to generate a hydrogen-rich reformed fuel by performing steam reforming of hydrocarbon-based gaseous fuel, a fuel cell stack configured to perform power generation by an electrochemical reaction between the generated reformed fuel and air, a fuel supply device configured to supply the gaseous fuel to the reforming device, a for-reforming-water supply device configured to supply water for the steam reforming to the reforming device, and a flow meter configured to measure a flow rate of the gaseous fuel supplied to the reforming device from the fuel supply device,
wherein the flow meter includes a thermal flow meter, and a composition-independent flow meter capable of measuring a flow rate without depending on a composition of the gaseous fuel,
in order to control respective supply amounts of the fuel supply device and the for-reforming-water supply device, the method of running a fuel cell system comprising:

   a measured flow rate abnormality determining step of determining whether there is an abnormal state based on a degree of difference between a measured value of the thermal flow meter and a measured value of the composition-independent flow meter;
   a conversion factor setting step of setting a conversion factor with respect to the measured value of the thermal flow meter when it is determined that there is the abnormal state; and
   a supply amount adjusting step of adjusting the supply amount of the gaseous fuel and the supply amount of water supplied by the fuel supply device and the for-reforming-water supply device based on the conversion factor.

FIG. 1

EP 2 808 609 A1

# FIG. 2

A
MEASURED FLOW
RATE ABNORMALITY
DETERMINATION
UNIT

B
CONVERSION
FACTOR SETTING
UNIT

C
SUPPLY AMOUNT ADJUSTING UNIT

C1
FUEL PROPERTY
ESTIMATING UNIT

C2
TARGET SUPPLY
AMOUNT
CORRECTING UNIT

# FIG. 3

```
        ┌─────────────────────────────────┐
        │    MEASURED FLOW RATE           │
        │  ABNORMALITY DETERMINATION      │
        └─────────────────────────────────┘
                      ↓
   S1   ┌─────────────────────────────────┐
        │    START INTEGRATION OF         │
        │  THERMAL FLOW METER VALUES      │
        └─────────────────────────────────┘
                      ↓
   S2   ┌─────────────────────────────────┐
        │    START INTEGRATION OF         │     Q1 ← THERMAL FLOW METER
        │  COMPOSITION-INDEPENDENT        │          INTEGRATED VALUE
        │    FLOW METER VALUES            │
        └─────────────────────────────────┘     Q2 ← COMPOSITION-
   S3   ┌─────────────────────────────────┐          INDEPENDENT FLOW
        │  EXECUTE INTEGRATION FOR        │          METER INTEGRATED VALUE
        │   PREDETERMINED TIME            │
        └─────────────────────────────────┘
                      ↓
```

S4
CONVERT THERMAL FLOW METER INTEGRATED VALUE Q1 INTO NORMAL
FLOW RATE (VOLUMETRIC FLOW RATE OF STANDARD STATE)
→ CALCULATE POST-CONVERSION THERMAL FLOW METER INTEGRATED VALUE Q1'

$$Q1' = Q1 \div \gamma$$

S5
CONVERT COMPOSITION-INDEPENDENT FLOW METER INTEGRATED
VALUE (VOLUMETRIC FLOW RATE) Q2 INTO NORMAL VALUE
→ CALCULATE POST-CONVERSION COMPOSITION-INDEPENDENT
FLOW METER INTEGRATED VALUE Q2'

$$Q2' = Q2 \times \frac{273.15}{273.15+Tf} \times \frac{101.33+Pf}{101.33}$$

S6
DO Q1' AND Q2' DIFFER BY A
CERTAIN DEGREE OR HIGHER?

NO                                              YES

S7
PERFORM NORMAL CONTROL

S8
SHIFT TO CONTROL AT
THE TIME OF MEASURED
FLOW RATE ABNORMALITY

END

# FIG. 4

```
       ╭─────────────────────────────────────╮
       │  CONTROL AT THE TIME OF MEASURED    │
       │       FLOW RATE ABNORMALITY         │
       ╰─────────────────────────────────────╯
                          ↓
  S11  ┌─────────────────────────────────────┐
       │     START INTEGRATION OF            │
       │   THERMAL FLOW METER VALUES         │
       └─────────────────────────────────────┘
                          ↓
  S12  ┌─────────────────────────────────────┐
       │     START INTEGRATION OF            │     Q1 ← THERMAL FLOW METER
       │  COMPOSITION-INDEPENDENT            │          INTEGRATED VALUE
       │     FLOW METER VALUES              │
       └─────────────────────────────────────┘     Q2 ← COMPOSITION-
                          ↓                              INDEPENDENT FLOW
  S13  ┌─────────────────────────────────────┐          METER INTEGRATED VALUE
       │   EXECUTE INTEGRATION FOR           │
       │     PREDETERMINED TIME             │
       └─────────────────────────────────────┘
                          ↓
```

$$S14 \quad \text{CONVERSION FACTOR CF} = \dfrac{Q2 \times \dfrac{273.15}{273.15+Tf} \times \dfrac{101.33+Pf}{101.33}}{Q1 \div \gamma}$$

$$S15 \quad \text{CONVERSION FACTOR CF} < \text{CF (CH4)}$$

YES / NO

$$S16 \quad \text{MOLAR FRACTION OF CH4} = \dfrac{\dfrac{CF(CH4) \times CF(C3H8)}{CF} - CF(CH4)}{CF(C3H8) - CF(CH4)}$$

$$S19 \quad \text{MOLAR FRACTION OF CH4} = \dfrac{\dfrac{CF(CH4) \times CF(N2)}{CF} - CF(CH4)}{CF(N2) - CF(CH4)}$$

S17 — MOLAR FRACTION OF C3H8 = 1 − MOLAR FRACTION OF CH4

S20 — MOLAR FRACTION OF N2 = 1 − MOLAR FRACTION OF CH4

S18 — MOLAR FRACTION OF N2 = 0

S21 — MOLAR FRACTION OF C3H8 = 0

S22 — CORRECTION COEFFICIENT K = f (MOLAR FRACTION OF CH4, MOLAR FRACTION OF C3H8)

S23 — SUPPLY AMOUNT OF FUEL = TARGET SUPPLY AMOUNT OF FUEL × CORRECTION COEFFICIENT K

```
                    ╭──────────╮
                    │   END    │
                    ╰──────────╯
```

FIG. 5

# FIG. 6

A
MEASURED FLOW
RATE ABNORMALITY
DETERMINATION
UNIT

B
CONVERSION
FACTOR SETTING
UNIT

C'
SUPPLY AMOUNT ADJUSTING UNIT

C1
FUEL PROPERTY
ESTIMATING UNIT

C2'
TARGET SUPPLY
AMOUNT
CALCULATING UNIT

## FIG. 7

CONTROL AT THE TIME OF MEASURED
FLOW RATE ABNORMALITY

S11 — START INTEGRATION OF
THERMAL FLOW METER VALUES

S12 — START INTEGRATION OF
COMPOSITION-INDEPENDENT
FLOW METER VALUES

$Q1 \leftarrow$ THERMAL FLOW METER
INTEGRATED VALUE

S13 — EXECUTE INTEGRATION FOR
PREDETERMINED TIME

$Q2 \leftarrow$ COMPOSITION-
INDEPENDENT FLOW
METER INTEGRATED VALUE

S14 —
$$\text{CONVERSION FACTOR CF} = \frac{Q2 \times \dfrac{273.15}{273.15+Tf} \times \dfrac{101.33+Pf}{101.33}}{Q1 \div \gamma}$$

S15 — CONVERSION FACTOR CF < CF (CH4)

YES → S16
$$\text{MOLAR FRACTION OF CH4} = \frac{\dfrac{CF(CH4) \times CF(C3H8)}{CF} - CF(CH4)}{CF(C3H8) - CF(CH4)}$$

S17 — MOLAR FRACTION OF C3H8
= 1 − MOLAR FRACTION OF CH4

S18 — MOLAR FRACTION OF N2
= 0

NO → S19
$$\text{MOLAR FRACTION OF CH4} = \frac{\dfrac{CF(CH4) \times CF(N2)}{CF} - CF(CH4)}{CF(N2) - CF(CH4)}$$

S20 — MOLAR FRACTION OF N2
= 1 − MOLAR FRACTION OF CH4

S21 — MOLAR FRACTION OF C3H8
= 0

S31 —
$$\text{SUPPLY AMOUNT OF FUEL} = \frac{\text{SERIES NUMBER OF CELLS} \times \text{AMOUNT OF CURRENT} \times 60}{Uf \times Fd \times (\text{MOLAR FRACTION OF CH4} \times 8 + \text{MOLAR FRACTION OF C3H8} \times 20)} \times 22.414$$

S32 —
$$\text{SUPPLY AMOUNT OF WATER} = \frac{\text{SUPPLY AMOUNT OF FUEL} \times (\text{MOLAR FRACTION OF CH4} \times 1 + \text{MOLAR FRACTION OF C3H8} \times 3)}{22.414} \times S/C \times 18.02$$

S33 —
$$\text{SUPPLY AMOUNT OF AIR} = \frac{\text{SERIES NUMBER OF CELLS} \times \text{AMOUNT OF CURRENT} \times 60}{Ua \times Fd \times (\text{MOLAR FRACTION OF O2 IN THE AIR} \times 4)} \times 22.414$$

END

## INTERNATIONAL SEARCH REPORT

| International application No. |
| --- |
| PCT/JP2013/051302 |

A.   CLASSIFICATION OF SUBJECT MATTER
*F23N5/00*(2006.01)i, *F23N1/00*(2006.01)i, *G01F1/00*(2006.01)i, *G01F1/68*
(2006.01)i, *G05D7/06*(2006.01)i

According to International Patent Classification (IPC) or to both national classification and IPC

B.   FIELDS SEARCHED

Minimum documentation searched (classification system followed by classification symbols)
F23N5/00, F23N1/00, G01F1/00, G01F1/68, G05D7/06

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y<br><br>A | JP 2007-24511 A  (National Institute of<br>Advanced Industrial Science and Technology),<br>01 February 2007 (01.02.2007),<br>paragraphs [0002] to [0010]; fig. 6, 7<br>(Family: none) | 1,2,6,7,11,<br>12<br>3-5,8-10 |
| Y<br><br>A | JP 2787785 B2  (Yamatake-Honeywell Co., Ltd.,<br>Tokyo Gas Co., Ltd.),<br>20 August 1998 (20.08.1998),<br>column 4, line 26 to column 8, line 40; fig. 1<br>to 5<br>& JP 4-64020 A          & US 5230245 A<br>& EP 465182 A3         & EP 465182 A2 | 1,2,6,7,11,<br>12<br>3-5,8-10 |

☒  Further documents are listed in the continuation of Box C.          ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 April, 2013 (02.04.13) | 16 April, 2013 (16.04.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/051302 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2009-87126 A  (Hitachi Metals, Ltd.),<br>23 April 2009 (23.04.2009),<br>entire text; all drawings<br>(Family: none) | 1-12 |
| A | JP 2011-209152 A  (Yamatake Corp.),<br>20 October 2011 (20.10.2011),<br>entire text; all drawings<br>(Family: none) | 1-12 |
| A | US 2010/0080262 A1  (ADVANCED ENERGY INDUSTRIES, INC.),<br>01 April 2010 (01.04.2010),<br>entire text; all drawings<br>& JP 2012-503833 A      & EP 2338038 A<br>& WO 2010/036675 A1     & KR 10-2011-0056543 A<br>& CN 102224397 A        & TW 201017358 A | 1-12 |
| A | JP 3-39623 A  (Tokyo Gas Co., Ltd., Oval Kiki Kogyo Kabushiki Kaisha),<br>20 February 1991 (20.02.1991),<br>entire text; all drawings<br>(Family: none) | 1-12 |
| A | JP 2010-8165 A  (Tokyo Gas Co., Ltd.),<br>14 January 2010 (14.01.2010),<br>entire text; all drawings<br>(Family: none) | 1-12 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011203075 A
- JP 2007024511 A

- JP 2004011487 A